# EUROPÄISCHE PATENTSCHRIFT

(11) **EP 0 423 849 B1**
(45) Veröffentlichungstag und Bekanntmachung des Hinweises auf die Patenterteilung: **08.02.1995**
(21) Anmeldenummer: 90125361.7
(22) Anmeldetag: 25.07.1987
(51) Int. Cl.: B05D 1/36, B05D 5/02

(54) **Verfahren zur Kunststoffummantelung von Stahlteilen**
Process to enwrap a piece of steel with a plastic layer
Procédé pour enduire des pièces en acier avec une couche en plastique

(30) Priorität: 23.08.1986 DE 3628704
(43) Veröffentlichungstag der Anmeldung: 24.04.1991
(62) Teilanmeldung aus: 87110813.0
(73) Patentinhaber: Blome GmbH & Co. Kommanditgesellschaft, D-44628 Herne (DE)
(72) Erfinder: Blome, Peter, W-4690 Herne 1 (DE)
(74) Vertreter: Rieder, Hans-Joachim, Dr.

(56) Entgegenhaltungen:
- DE-A- 3 311 893
- DE-A- 3 531 618
- DE-A- 3 607 459
- GB-A- 1 532 544
- US-A- 3 599 435

## Beschreibung

Die Erfindung betrifft ein Verfahren zur Ummantelung von Stahlteilen, insbesondere Röhren, auf deren Mantelfläche eine Kunststoffbeschichtung aufgebracht wird, die zumindest bereichsweise mit einem Umbettungsmaterial in Kontakt bringbar ist bzw. in Kontakt steht, wobei die von der Außenfläche der Kunststoffbeschichtung gebildete Grenzfläche zum Umbettungsmaterial mit Profilierungsvorsprüngen versehen ist. Darüberhinaus betrifft die Erfindung auch ein mit einer Kunststoffbeschichtung versehenes Stahlteil, das zumindest bereichsweise in ein Umbettungsmaterial einbettbar bzw. eingebettet ist, wobei die von der Außenfläche der Kunststoffbeschichtung gebildete Grenzfläche zum Umbettungsmaterial mit Profilierungsvorsprüngen versehen ist. Zum Stand der Technik ist auf die US-PS 3599435 zu verweisen. Aus dieser Druckschrift ist es bekannt, ein Stahlrohr mit einer mastixharzartigen Masse zu versehen, wobei in die mastixharzartige Masse sodann auch Vorsprünge in Form von ringartig verlaufenden, sich quer zur Längsachse des Rohres erstreckenden Erhebungen eingeformt werden. Hinsichtlich des Stahlteiles ist von Bedeutung, daß die Erhebungen aus dem selben Material wie die Beschichtung an sich bestehen, insofern also auch eine gleiche Härte aufweisen.

Weiterhin ist auf die größte Ebene OS 3531618 zu verweisen. Bei dem aus dieser Druckschrift bekannten Verfahren wird ein Stahlrohr mit einer thermoplastischen Kunststoffschicht versehen, auf die nachfolgend eine außenliegende Beschichtung auf Betonbasis aufgebracht wird. Die Kunststoffbeschichtung erfolgt durch schraubenlinienförmiges überlappendes Umwickeln mit einem extrudierten Folienband, das mit mindestens einer streifenförmig über die gesamte Länge des Folienbandes verlaufenden Verdickung versehen ist. Die Verdickung ist an dem Rand des Folienbandes angeordnet, der nicht von einer nachfolgenden Lage des Folienbandes überlappt wird.

Die Betonbeschichtung dient insbesondere dazu, die Rohre zu beschweren, um bei der Verlegung von Off-Shore-Pipelines den hydrostatischen Auftrieb der leeren Rohre durch zusätzliches Gewicht auszugleichen. Bei der Verlegung derartiger Rohre treten erhebliche Zugbelastungen auf, die von den Haltevorrichtungen der Verlegeschiffe über die Ummantelung auf die Stahlrohre übertragen werden. Die streifenförmigen, in die Betonbeschichtung eingebetteten Verdickungen des Folienbandes dienen zu Erhöhung der Haftung zwischen Kunststoffummantelung und dem Betonmantel.

Der Erfindung liegt die Aufgabe zugrunde, ein Verfahren der eingangs genannten Art sowie ein entsprechendes Stahlteil anzugeben, das auf besonders einfache Weise zu einer erhöhten Haftung zwischen Kunststoffbeschichtung und Umbettungsmaterial führt. Insbesondere sollen bei einer thermoplastischen Kunststoffbeschichtung keine Spezial-Extruderdüsen notwendig sein.

Diese Aufgabe wird erfindungsgemäß dadurch gelöst, daß die Profilierungsvorsprünge von den Seitenflanken einer auf die erhitzte Kunststoffbeschichtung extrudierten Wendelrippe gebildet sind. Handelt es sich bei dem Stahlbauteil um einen länglichen Gegenstand, z.B. ein Rohr, so bilden die Profilierungsvorsprünge quer zur Längsrichtung des Gegenstandes liegende Stufen aus. Zufolge derartiger Ausgestaltung ergibt sich ein schubfester Verbund zwischen der Kunststoffummantelung und dem Umbettungsmaterial, das vorzugsweise als Beton-Ummantelung ausgebildet sein kann. Werden derartige als Rohre ausgebildete Stahlbauteile in der See verlegt, so werden die zwischen dem Ummantelungsmaterial und dem Rohr auftretenden Längsverschiebungskräfte durch den durch die Profilierungsvorsprünge gebildeten Formschluß aufgefangen. Aufgrund der Wendelrippe werden quer zur Längsrichtung des Rohres liegende Stufen ausgebildet. Die Größe der Stufen ist dabei abhängig von dem Durchmesser des Rohres bzw. von dem Gewicht der Betonummantelung und des Stahlrohres selbst. Erfindungsgemäß ist vorgesehen, daß zunächst die Kunststoffbeschichtung auf das Stahlteil aufgebracht und anschließend die Wendelrippe auf diese Beschichtung extrudiert wird. Bei der Kunststoffbeschichtung handelt es sich vorzugsweise um eine Thermoplastschicht, so daß das Nacheinanderaufbringen von Beschichtung und Wendelrippe zu dem Vorteil führt, daß keine speziellen Extruderdüsen eingesetzt werden müssen, wie sie aus dem Stand der Technik (DE-OS 35 31 618) bekannt sind, welche die Beschichtung und die Rippe gleichzeitig erzeugen. Vielmehr erfolgt die Beschichtung erfindungsgemäß unabhängig von der Rippenausformung, so daß -je nach Anwendungsfall- jeweils die form- oder größenmäßig richtige Extruderdüse für die Rippe unabhängig von der Extruderdüse für die Kunststoffbeschichtung ausgewählt werden kann. Mithin kann die Beschichtungsanlage sehr schnell auf den jeweils gewünschten Anwendungsfall durch einfachen Austausch der Wendelrippen-Extruderdüse angepaßt werden.

Ferner ist vorgesehen, daß zeitlich unmittelbar nach dem Aufbringen der thermoplastischen Kunststoffbeschichtung auf diese die Wendelrippe unter Beaufschlagung der Bahnaußenseite und/oder der Befestigungsseite der Wendelrippe mit einer Wärmequelle zur Aufrechterhaltung der Oberflächen-Schmelztemperatur aufgebracht wird. Das sich nach dem Aufbringen der Kunststoffbeschichtung noch im heißen Zustand befindliche Stahlbauteil wird somit sofort anschließend mit der Rippe versehen, was energietechnisch sinnvoll ist. Um einen festen Verbund zwischen Kunststoffbeschichtung und Rippe sicherzustellen, ist die Kunststoffbeschichtung bzw. die Befestigungsseite der Rippe auf Oberflächen-Schmelztemperatur zu halten. Es genügt dabei, wenn nur einige »m der entsprechenden Oberfläche in angeschmolzenem Zustand gehalten werden. An der Berührungsstelle erfolgt eine innige Verschmelzung.

Nach einer Weiterbildung der Erfindung kann vorgesehen sein, daß die aufgebrachte Kunststoffbeschichtung bis zum Aufbringen der Wendelrippe zur Erhöhung der Strukturfestigkeit der Kunststoffbeschichtung gekühlt wird. Dieses hat den Vorteil, daß die abgekühlte Kunststoffbeschichtung in der Lage ist, Kräfte auszunehmen, so daß die von der Wendelrippe anschließend ausgeübten, durch deren Abkühlung verursachten Schrumpfspannungen schadensfrei aufgenommen werden können. Das bei der Rippenaufbringung erfolgende erneute Anschmelzen der Oberfläche der Kunststoffbeschichtung stört dabei nicht, denn das Aufschmelzen erfolgt nur in einem Tiefenbereich von wenigen »m, was der durch die Abkühlung im übrigen Bereich erzielten Strukturfestigkeit keinen Abbruch tut.

Überdies besteht ein vorteilhaftes Merkmal darin, daß eine unterschiedliche Härte der Profilierungsvorsprünge und der Kunststoffbeschichtung, insbesondere der extrudierten Bahn, vorgesehen ist. Ein besonders fester Verbundeingriff zum Umbettungsmaterial läßt sich insbesondere dadurch erzielen, daß die Profilierungsvorsprünge aus dem härteren Material bestehen.

Die Anordnung kann so getroffen sein, daß das Umbettungsmaterial zu Fixierung des insbesondere als Rohr ausgebildeten Stahlteils ortsfest angeordnet ist. Insbesondere kann das Umbettungsmaterial als ein im Erdreich festlegbarer Ankerblock ausgebildet sein. Hierdurch wird die Möglichkeit eröffnet, beispielsweise bei einer Pipeline die einzelnen, zusammengeschweißten Rohre an bestimmten Punkten ortsfest zu fixieren. Durch Festlegung des vorzugsweise aus Beton bestehenden Ankerblockes im Erdreich ist an dieser Stelle das Stahlrohr fixiert, da aufgrund der erfindungsgemäßen Profilierungsvorsprünge ein fester Verbund zwischen Stahlrohr und Ankerblock besteht.

Nach einer Variante ist vorgesehen, daß für eine Fixierung des mit Profilierungsvorsprüngen versehenen Stahlbauteils ein mit Halteankern versehener Rohrabschnitt das Stahlbauteil umgibt, wobei der Rohrabschnitt an seiner Innenseite mit einer Axialkräfte aufnehmenden Profilierung versehen ist und der Ringraum zwischen Stahlbauteil und Rohrabschnitt mit einer ausgehärteten Verbundmasse gefüllt ist. Auch hierdurch läßt sich das Stahlbauteil,z.B. ein Rohr, ortsfest fixieren, indem die Halteanker beispielsweise an einem Betonfundament verankert oder an einer entsprechenden Konstruktion befestigt werden. Über die Halteanker ist der Rohrabschnitt fixiert, der wiederum über die ausgehärtete Verbundmasse mit den Profilierungsabschnitten unverschieblich in Verbindung steht. Eine Verschiebung der Verbundmasse ist ausgeschlossen, da diese einerseits in die Profilierungsvorsprünge der Beschichtung eingreift und andererseits von der Innenseitenprofilierung des Rohrabschnittes gehalten ist.

Als Verbundmasse kann beispielsweise Beton eingesetzt werden, vorzugsweise kommt jedoch Kunstharz zum Einsatz.

Als Profilierung der Innenseite des Rohrabschnittes bietet sich ein dort befestigter Wendelsteg, z.B. ein aufgeschweißter Stahlwendelsteg an, sofern der Rohrabschnitt ebenfalls aus Stahl besteht.

Die Zeichnungen veranschaulichen die Erfindung anhand mehrerer Ausführungsbeispiele, und zwar zeigt:
- Fig. 1: in perspektivischer Darstellung ein Stahlrohr gemäß einer ersten Ausfuhrungsform,
- Fig. 2: einen Abschnitt des Rohres im Längsschnitt,
- Fig. 3: in schematischer Darstellung das Aufbringen einer extrudierten Bahn nebst Rippe auf ein Stahlrohr,
- Fig. 4: einen ausschnittsweisen Längsschnitt durch das Rohr gemäß einer mit Pulver- bzw. Granulatkörpern versehenen Ausführungsform,
- Fig. 5: ebenfalls im schematischer Darstellung das Aufbringen der extrudierten Bahn auf das Rohr und der Pulverkörner bzw. Granulate auf die Bahn,
- Fig. 6: eine perspektivische, schematische Ansicht eines als Rohr ausgebildeten Stahlteils, das mittels eines Ankerblockes festgelegt ist, wobei die Profilierungsvorsprünge von Pulver- bzw. Granulatkörnern gebildet sind,
- Fig. 7: eine Darstellung gemäß Fig. 6, wobei jedoch die Profilierungsvorsprünge von einer Wendelrippe gebildet sind,
- Fig. 8: eine teilweise als Schnittansicht ausgebilde te Darstellung, in der ein Rohr mittels eines Rohrabschnitts fixiert ist, wobei als Profilierungsvorsprünge Pulver- bzw. Granulatkörner auf die Kunststoffbeschichtung des Rohres aufgebracht sind und
- Fig. 9: eine Ansicht gemäß Fig. 8, wobei jedoch als Profilierungsvorsprünge eine Wendelrippe vorgesehen ist.

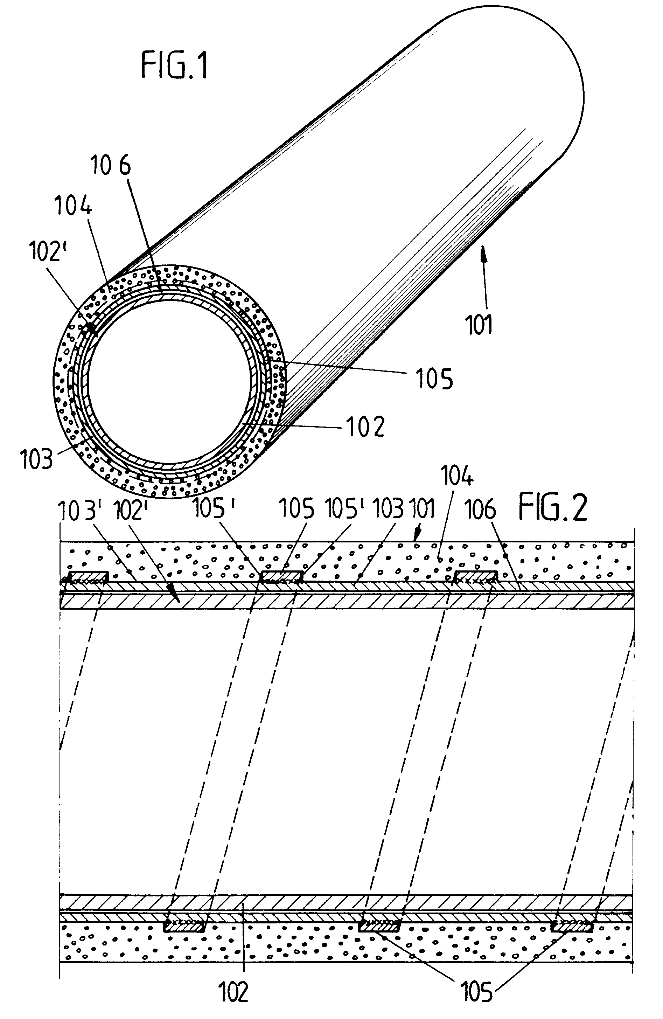

Das als Pipeline-Rohr ausgebildete Rohr 101 besitzt gemaß Fig. 1 ein inneres, oberflächenkonditioniertes ein Stahlteil 102 darstellendes Stahlrohr 102. Bezüglich der Konditionierung kann es sich bspw. um eine Phospatisierung handeln. Weiterer Bestandteil des Pipelinerohres 101 ist eine das Stahlrohr 102 umgebene innere Ummantelung 103 aus Kunststoff. Hierfür eignen sich insbesondere Thermoplaste. Sodann ist noch eine äußere Ummantelung 104 aus armiertem Beton vorgesehen.

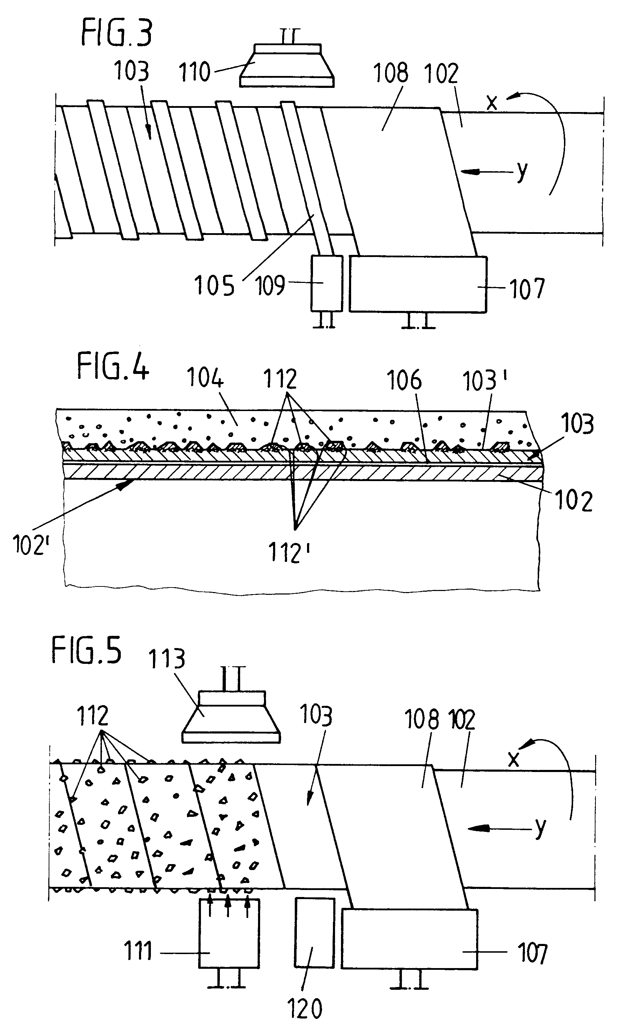

Um die Längsschiebehaftung zwischen dem ummantelten Stahlrohr 102 und Beton-Ummantelung 104 optimal zu gestalten, ist gemäß der Ausführungsform der Fig. 5 eine von der inneren Ummantelung 103 ausgehende, wendelförmig verlaufende Rippe 105 vorgesehen. Die Seitenflanken 105' der Wendelgänge der in Flachform gestalteten Rippe 105 stellen Profilierungsvorsprünge dar, welche in die Beton-Ummantelung 104 ragen und zu einem Formschluß führen. Die wendelförmig aufgebrachte Rippe 105 geht von der Mantelfläche 103' der inneren Ummantelung 103 aus und ist fest mit dieser verbunden. Bezüglich der Rippe 105 handelt es sich ebenfalls um thermoplastisches Material, welches gegenüber demjenigen der inneren Ummantelung 103 härter gewählt ist.

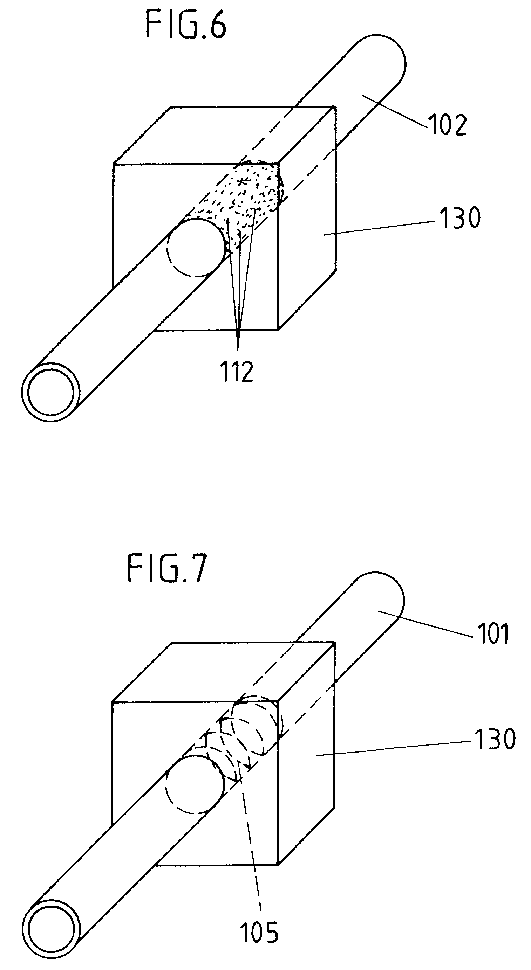

Das Beschichten des oberflächenkonditionierten Rohres 102 mit der innere Ummantelung 103 geht aus Fig. 6 hervor. Auf das mit einer dünnen Klebeschicht 106 versehene Stahlrohr 102 wird eine aus einer Extruderdüse 107 kommende Bahn 108 aufgewickelt. Das Stahlrohr 102 führt dabei eine überlagerte Bewegung aus. Neben einer Drehung in Pfeilrichtung x wird es in Pfeilrichtung y längs der Extruderdüse 107 vorbeibewegt. Auf diese Weise wird die extrudierte Bahn 108 auf das Stahlrohr 102 aufgewendelt und bildet die innere Ummantelung 103. Das Rohr wird wahrend dieses Aufbringens auf die erforderliche Temperatur erwärmt.

Der Extruderdüse 107 ist eine Zusatzextruderdüse 109 benachbart. Durch diese wird die Rippe 105 geformt, welche auf die Ummantelung 103 wendelförmig aufgewikkelt wird. Dieses Aufbringen der Rippe 105 erfolgt bei Verschmelzungstemperatur derart, daß kein Durchschmelzeffekt entsteht. Da das Aufbringen der Rippe 105 nachgeordnet ist, wird zur Erzielung einer ausreichenden Schmelztemperatur ein Infrarotstrahler 110 in Gegenüberlage der Zusatzextruderdüse 109 installiert.

Das Umschichten des mit der inneren Ummantelung 103 und der Rippe 105 versehenen Rohres kann dann in einem nachfolgenden Arbeitsgang in der üblichen Weise geschehen, wobei der Beton in die Zwischenräume zwischen den Wendelgängen tritt. Letztere bilden quer zur Längsrichtung des Rohres liegende Stufen, die in Achsrichtung zu einer großen Lagenstabilität des Betonsmantels auf dem Stahlrohr 102 führen. Die Fig. 4 und 5 veranschaulichen die Herstellung der Ausführungsform eines als Rohr ausgebildeten Stahlbauteils, wobei -wie zuvor- die innere Ummantelung 103 in gleicher Weise aufgebracht wird, indem eine aus der Extruderdüse 107 kommende Bahn 108 auf das eine überlagerte Bewegung ausführende Stahlrohr 102 aufgewendelt wird.

Abweichend von der zur vorigen Ausführungsform ist der Extruderdüse 107 eine Beschickungseinrichtung 111 nachgeordnet. Diese enthält vorgewärmte, gemahlene, aus Kunststoff bestehende Pulver 112 bzw. Granulate, die in geeigneter Weise auf das kunststoffummantelte Rohr aufgebracht werden. In Gegenüberlage zur Beschickungseinrichtung 111 ist ebenfalls ein Infrarotstrahler 113 angeordnet, der die vorschriftsmäßige Verschmelzungstemperatur erzeugt. Die Granulate 112 treten in Verbindung zur inneren Ummantelung 103, und zwar ohne Durchschmelzeffekt, so daß auf diese Weise die Mantelfläche 103' der Ummantelung 103 überragende Profilierungsvorsprünge gebildet sind, vergl. insbesondere Fig. 4. Die Granulat-Profilierungsvorsprünge 112 formen ebenfalls quer zur Längsrichtung des Rohres verlaufende Stufen 112', die zu einem Formschluß zwischen Beton-Ummantelung 104 und innerer Ummantelung 103 führen.

Je nach Einsatzzweck und Größe der Rohre können die Pulverkörner bzw Granulate in ihrer Größe variieren. Auch bei dieser Version können die Granulate 112 eine größere Härte besitzen als die innere Ummantelung 103.

Vorteilhaft ist es, wenn die aufgebrachte Kunststoffbeschichtung bis zum Aufbringen der Wendelrippe zur Erhöhung der Strukturfestigkeit der Kunststoffbeschichtung gekühlt wird. Eine Einrichtung zur Kühlung der Kunsttoffbeschichtung ist in der Fig. 5 schematisch dargestellt und mit der Bezugsziffer 120 gekennzeichnet. Die Kühleinrichtung 120 liegt zwischen der Extruderdüse 107 für die Kunststoffbeschichtung und der Beschickungseinrichtung 111 für das Aufbringen der Profilierungsvorsprünge. Eine derartige Kühleinrichtung kann ferner auch bei dem Ausführungsbeispiel gemäß Fig. 3 vorgesehen sein (nicht dargestellt); sie würde dann zwischen der Extruderdüse 107 und der Zusatzextruderdüse 109 liegen. Durch die Kühlung der unter Hitzeeinwirkung aufgebrachten Kunststoffbeschichtung erlangt diese eine Strukturfestigkeit, so daß die nach der anschließend aufgebrachten Wendelrippe auftretenden Schrumpfspannungen beim Abkühlen aufgenommen werden können, ohne daß eine Beschädigung der Beschichtung auftritt. Durch die Kühlung wird jedoch auch die Oberflächentemperatur der Kunststoffbeschichtung derart weit herabgesetzt, daß das anschließende Aufbringen der Profilierungsvorsprünge nicht erfolgen kann. Hier schaffen jedoch Wärmequellen (Infrarotstrahler 110, Infrarotstrahler 113) Abhilfe, in dem sie lediglich die Oberfläche der Rohrbeschichtung nur einige »m tief wieder anschmelzen, so daß eine innige Verbindung zu den jeweiligen Profilierungsvorsprüngen geschaffen wird. Die durch die Kühlung gechaffene Strukturfestigkeit bleibt dabei im wesentlichen erhalten. Mittels der Kühlung läßt sich bei dem Ausführungsbeispiel der Fig. 5 auch die Eindringtiefe der Pulverkörper 112 bzw. Granulatkörner steuern.

Erfindungsgemäß ist vorgesehen, ein mit Kunststoffbeschichtung und Profilierungsvorsprüngen versehenes Stahlteil mittels des Umbettungsmaterisls festzulegen. Dieses ist in der Fig. 6 dargestellt, wobei es sich bei dem Stahlteil um ein kunststoffummanteltes Rohr mit eingeschmolzenen Pulver- bzw. Granulatkörnern handelt, wie es in der Fig. 5 dargestellt ist. Hierzu sei noch erwähnt, daß die Kunststoffbeschichtung nicht durch Extruderwickel erzeugt zu sein braucht, vielmehr ist es alternativ auch möglich einen Schlauch zu extrudieren, der auf das Stahlrohr aufgebracht wird. Gemäß Fig. 6 ist das Umbettungsmaterial nicht -wie zuvor beschrieben- als das Rohr umgebende, vorzugsweise aus Beton bestehende Röhre ausgebildet, sondern bildet einen quaderförmigen Block 130. Vorzugsweise kann dieser Block 130 aus Beton bestehen und sich nur über eine Teillänge des Rohres erstrecken. Das ummantelte Rohr 102 weist zumindest im Bereich des Blockes 130 auf seiner Kunststoffbeschichtung Pulver- bzw. Granulatkörner 112 auf, so daß eine innige Verbindung zwischen dem Block 130 und der Kunststoffbeschichtung besteht. Das den Block 130 durchsetzende Rohr 102 ist insofern unverschieblich relativ zum Block 130 festgelegt. Der Block 130 kann einen Ankerblock bilden, wenn dieser beispielsweise im Erdreich eingegraben oder auf andere Weise festgelegt wird. Beispielsweise kann man bei Pipelines auf diese Art und Weise Fixpunkte schaffen, die das sich bei Wärme ausdehnende und bei Kälte zusammenziehende Rohr festlegen.

In der Fig. 7 ist ein weiteres Ausführungsbeispiel dargestellt, daß sich von dem der Fig. 6 lediglich dadurch unterscheidet, daß das Rohr als Wendelrippe 105 ausgebildete Profilierungsvorsprünge aufweist.

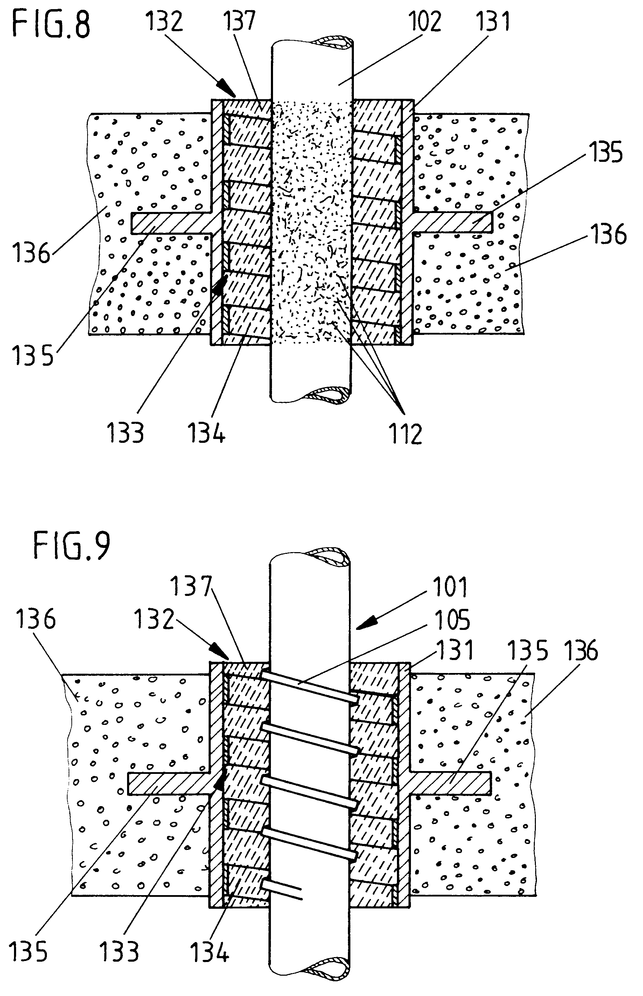

Eine weitere Ausführungsvariante zur Festlegung des Rohres ergibt sich aus Fig. 8. Das Rohr 102 wird bereichsweise von einem Rohrabschnitt 131 koaxial umgeben, wobei zwischen Rohr 102 und Rohrabschnitt 131 ein Ringraum 132 geschaffen wird. An der Innenseite des Rohrabschnittes 131 ist eine Profilierung 133 ausgebildet, die als mit der Innenseite des Rohrabschnittes 131 verbundener Wendelsteg 134 ausgebildet sein kann. Der Wendelsteg 134 bildet Stufen in Axialrichtung des Rohrabschnites aus. Das Rohr 102 ist kunststoffbeschichtet und weist zumindest im Bereich des Rohrabschnittes 131 Profilierungsvorsprünge auf, die gemäß Fig. 8 als Pulver- bzw. Granulatkörner 112 ausgebildet sind. An der Außenseite des Rohrabschnittes 131 sind Halteanker 135 befestigt, die in ein Fixierungsmaterial 136 eingebettet sind. Bei dem Fixierungsmaterial 136 kann es sich bespielsweise um ein Betonbauteil handeln, das wiederum im Erdreich oder dergleichen festgelegt wird. Überdies ist es auch möglich, die Halteanker 135 an entsprechend anderen Konstruktionen anzuschlagen. Der Ringraum 132 ist mit einer ausgehärteten Verbundmasse 137 ausgefüllt. Auf diese Art und Weise ergibt sich eine innige Verbindung zwischen dem Rohr 102 und dem Rohrstutzen 131, da die Verbundmasse 137 vor dem Aushärten zwischen die Profilierungsvorsprünge 112 und die Profilierung 133 getreten ist und insoweit eine Axialverschiebung zwischen Rohrabschnitt 133 und Rohr 102 verhindert. Der Rohrabschnitt 133 wird durch die Halteanker 135 im Fixierungsmaterial 136 gehalten. Auf diese Art und Weise ist somit -ebenso wie bei den Fig. 9 und 10- eine Fixiermöglichkeit für das Rohr 102 geschaffen.

Die Fig. 9 zeigt ein weiteres Ausführungsbeispiel, das sich von der Fig. 8 lediglich dadurch unterscheidet, daß das Rohr nicht mit Profilierungsvorsprüngen aus Pulver- bzw. Granulatkörpern versehen ist, sondern an seiner Kunststoffbeschichtung eine Wendelrippe 105 aufweist.

Als Verbundmasse 137 kann vorzugsweise Kunstharz eingesetzt werden. Jedoch ist es auch möglich, Beton zu verwenden.

Schließlich sei noch darauf hingewiesen, daß beim Aufbringen der Ringrippe 105 auf die Kunststoffbeschichtung des Rohres Andruckwalzen vorgesehen sein können, die den Wendelsteg fest auf die Kunststoffoberfläche pressen und auf diese Art und Weise das Festlegen der Wendelrippe unterstützen.

## Patentansprüche

1. Verfahren zur Ummantelung von Stahlteilen (102), insbesondere Röhren, auf deren Mantelfläche eine Kunststoffbeschichtung aufgebracht wird, die zumindest bereichsweise mit einem Umbettungsmaterial in Kontakt bringbar ist bzw. in Kontakt steht, wobei die von der Außenfläche der Kunststoffbeschichtung gebildete Grenzfläche zum Umbettungsmaterial mit Profilierungsvorsprüngen (105) versehen ist, dadurch gekennzeichnet, daß die Profilierungsvorsprünge (105) von den Seitenflanken (105') einer auf die erhitzte Kunststoffbeschichtung (Bahn 108) extrudierten Wendelrippe (105) gebildet sind.

2. Verfahren nach Anspruch 1, dadurch gekennzeichnet, daß zeitlich unmittelbar nach dem Aufbringen der thermoplastischen Kunststoffbeschichtung (108) auf diese die Wendelrippe (105) unter Beaufschlagung der Beschichtungsaußenseite und/oder der Befestigungsaußenseite der Wendelrippe (105) mit einer Wärmequelle (110,113) zur Aufrechterhaltung der Oberflächen-Schmelztemperatur aufgebracht wird.

3. Verfahren nach Anspruch 2, dadurch gekennzeichnet, daß die aufgebrachte Kunststoffbeschichtung (5,103) bis zum Aufbringen der Wendelrippe (105) bzw. der Pulver-/Gra nulatkörner (112) zur Erhöhung der Strukturfestigkeit der Kunststoffbeschichtung (5,103) gekühlt wird.

4. Mit einer Kunststoffbeschichtung versehenes Stahlteil, das zumindest bereichsweise in ein Umbettungsmaterial einbettbar ist bzw. eingebettet ist, wobei die von der Außenfläche der Kunststoffbeschichtung gebildete Grenzfläche zum Umbettungsmaterial mit Profilierungsvorsprüngen (105) versehen ist, gekennzeichnet durch eine unterschiedliche Härte der Profilierungsvorsprünge (105) und der Kunststoffbeschichtung (extrudierte Bahn 108).

5. Stahlteil nach Anspruch 4, dadurch gekennzeichnet, daß das Umbettungsmaterial (130,137) zur Fixierung des insbesondere als Rohr (101,102) ausgebildeten Materiales ortsfest angeordnet ist.

6. Stahlteil nach Anspruch 5, dadurch gekennzeichnet, daß das Umbettungsmaterial als im Erdreich festlegbarer Ankerblock (130) ausgebildet ist.

7. Stahlteil nach Anspruch 5, dadurch gekennzeichnet, daß für eine Fixierung des mit Profilierungsvorsprüngen versehenen Stahlbauteils ein mit Halteankern (135) versehener Rohrabschnitt (131) das Stahlbauteil umgibt, wobei der Rohrabschnitt (131) an seiner Innenseite mit Axialkräfte aufnehmender Profilierung (133) versehen ist und daß der Ringraum (132) zwischen Stahlbauteil und Rohrabschnitt (131) mit einer ausgehärteten Verbundmasse (137) gefüllt ist.

8. Stahlteil nach Anspruch 7, dadurch gekennzeichnet, daß die Verbundmasse (137) Kunstharz ist.

9. Stahlteil nach Anspruch 7 und/oder 8, dadurch gekennzeichnet, daß die Profilierung (133) von einem mit der Innenseite des Rohrabschnittes (131) verbundenen Wendelsteg (134) gebildet ist.

## Claims

1. Method for encasing steel components (102), in particular pipes, to the peripheral surface of which is applied a plastic coating which, at least in certain regions, can be brought into or is in contact with an embedding material, wherein the interface with the embedding material, formed by the outer surface or the plastic coating, is provided with profiling projections (105), characterised in that the profiling projections (105) are formed by the side flanks (105') or a helical rib (105) extruded onto the heated plastic coating (web 108).

2. Method according to claim 1, characterised in that immediately after application or the thermoplastic coating (108) in time, the helical rib (105) is applied thereto, exposing the outside of the coating and/or the mounting side of the helical rib (105) to a heat source (110, 113) to maintain the surface melting temperature.

3. Method according to claim 2, characterised in that the applied plastic coating (5, 103) is cooled until application of the helical rib (105) or of the powder/granules (112) to increase the structural strength of the plastic coating (5, 103).

4. Steel component which is provided with a plastic coating and which, at least in certain regions, can be or is embedded in an embedding material, wherein the interface with the embedding material, formed by the outer surface of the plastic coating, is provided with profiling projections (105), characterised by a difference in hardness between the profiling projections (105) and the plastic coating (extruded web 108).

5. Steel component according to claim 4, characterised in that the embedding material (130, 137) is disposed stationarily for fixing the material constructed in particular as a pipe (101, 102).

6. Steel component according to claim 5, characterised in that the embedding material is constructed an an anchor block (130) which can be fixed in the ground.

7. Steel component according to claim 5, characterised in that for fixing the steel component provided with profiling projection, a pipe section (131) provided with holding anchors (135) surrounds the steel component, wherein the pipe section (131) is provided on its inside with profiling (133) which absorbs axial forces, and in that the annular space (132) between steel component and pipe section (131) is filled with a hardened bonding composition (137).

8. Steel component according to claim 7, characterised in that the bonding composition (137) is synthetic resin.

9. Steel component according to claim 7 and/or 8, characterised in that the profiling (133) is formed by a helical ridge (134) connected to the inside of the pipe section (131).

## Revendications

1. Procédé pour envelopper des pièces en acier (102), en particulier des tubes sur la surface d'enveloppe desquels on dépose une couche de matière synthétique qui est susceptible d'être mise ou qui est mise en contact, au moins par zones, avec un matériau de revêtement périphérique, la surface frontière ou surface limite par rapport au matériau de revêtement périphérique, formée par la surface extérieure, du revêtement en matière synthétique étant pourvue de saillies de profilage (105), caractérisé en ce que les saillies de profilage (105) des flancs latéraux (105') sont réalisés sous la forme d'une nervure hélicoïdale extrudée (105) sur le revêtement en matière synthétique chauffé (bande 108).

2. Procédé selon la revendication 1, caractérisé en ce qu'immédiatement après l'application du revêtement (108) en matière synthétique thermoplastique (108), on applique sur ce revêtement la nervure hélicoïdale (105), en exposant la face extérieure du revêtement et/ou la face extérieure de fixation de la nervure helicoïdale (105), à une source de chaleur (110, 113), afin de maintenir la température de fusion sur ces surfaces.

3. Procédé selon la revendication, 2, caractérisé en ce que le revêtement en matière synthétique (5, 103) appliqué est refroidi jusqu'à l'application de la nervure hélicoïdale (105) ou de grains et granulés de poudre (112) afin d'augmenter la résistance structurelle du revêtement en matière synthétique (5, 103)

4. Pièce en acier munie d'un revêtement en matière synthétique, qui est susceptible d'être enrobée ou qui est enrobée, au moins par zones, dans un matériau périphérique, la surface frontière ou surface limite par rapport au matériau de revêtement périphérique, formée par la surface extérieure du revêtement en matière synthétique, étant pourvue de saillies de profilage (105), caractérisée par une dureté différente des saillies de profilage (105) et du revêtement en matière synthétique (bande extrudée 108).

5. Pièce en acier selon la revendication 4, caractérisée en ce que le matériau de revêtement périphérique (130, 137) pour la fixation du matériau, réalisé en particulier sous la forme de tube (101, 102), est disposé localement fixe.

6. Pièce en acier selon la revendication 5, caractérisée en ce que la matériau de revêtement périphérique est réalisé sous la forme d'un bloc d'ancrage (130) susceptible d'être fixé dans le sol.

7. Pièce en acier selon la revendication 5, caractérisée en ce qu'un tronçon de tube (131) muni de pièces d'ancrage de fixation (135) entoure la pièce de construction en acier afin d'assurer la fixation de celle-ci qui est munie de saillies de profilage, le tronçon de tube (131) étant pourvu sur sa face intérieure d'un profilage (133) destiné à supporter les forces axiales, et en ce que l'espace annulaire (132) entre la pièce de construction en acier et le tronçon de tube (131) est rempli d'une masse de liaison durcie.

8. Pièce en acier selon la revendication 7, caracterisée en ce que la masse (137) de liaison est en résine synthétique.

9. Pièce en acier selon la revendication 7 et/ou 8, caractérisée en ce que le profilage (133) est formé d'une nervure hélicoïdale (134) reliée à la face intérieure du tronçon de tube (131).
